# EUROPÄISCHE PATENTANMELDUNG

(11) **EP 0 999 172 A1**
(43) Veröffentlichungstag der Anmeldung: **10.05.2000**
(21) Anmeldenummer: 99122129.2
(22) Anmeldetag: 05.11.1999
(51) Int. Cl.: B66C 23/34

(54) **Schnellmontageachse für einen Turmdrehkran**

(30) Priorität: 05.11.1998 DE 19850902
(71) Anmelder: Manfred Scherger Baumaschinen, 63863 Eschau (DE)
(72) Erfinder: Scherger, Manfred, 63863 Eschau (DE)
(74) Vertreter: Küchler, Stefan

(57) **Zusammenfassung**

Die Erfindung richtet sich auf eine an einen Turmdrehkran (1) zu dessen Transport auf Straßen anbaubare Schnellmontagebaugruppe (16,17) mit einem Fahrwerk, das wenigstens zwei straßengängige Räder (20,21) aufweist, deren Abstand etwa der Breite des Turmdrehkrans (1) entspricht, mit wenigstens einer, auf die Drehstellung wenigstens eines Rades (20,21) einwirkenden Antriebseinheit (24,75,83), die unabhängig von der Bewegung eines Zugfahrzeugs steuerbar ist.

## Beschreibung

Die Erfindung richtet sich auf eine Schnellmontagebaugruppe mit wenigstens einer Fahrgestellachse zum Anbau an einen Turmdrehkran zu dessen Transport auf Straßen, wobei die Länge der Achse etwa der Breite des Turmdrehkrans entspricht.

Turmdrehkräne sind seit vielen Jahren von Baustellen insbesondere bei der Errichtung von größeren Bauwerken nicht mehr wegzudenken. Sie erleichtern den Transport von schweren und/oder unhandlichen Bauteilen auch zu den höher gelegenen Etagen sowie entfernen Teilen eines Bauwerks. Damit auch an dem freien Ende des Kranauslegers noch Lasten von bspw. 1 t angehoben werden können, wird ein Turmdrehkran üblicherweise mit Ausgleichsgewichten insbesondere in Form von Betonplatten mit einem Vielfachen des Gewichts der anzuhebenden Last beschwert. Eine weitere Voraussetzung für einen sicheren Betrieb insbesondere bei oben drehenden Turmdrehkränen ist eine exakt vertikale Ausrichtung des Mastes. Diese Randbedingungen erfordern ein festes Fundament, was gerade an Baustellen mit größeren Erdbewegungen nicht immer einfach herzustellen ist. Ist einmal ein geeigneter Platz für den Kran gefunden und gegebenenfalls ein Fundament vorbereitet, so muß der in zusammengelegtem Zustand antransportierte Turmdrehkran zu diesem bereits erwählten Standort rangiert werden. Zwar verfügen kleine bis mittelgroße Turmdrehkräne vielfach über ein eigenes oder anbaubares Fahrwerk, so daß sie für den Straßentransport an eine Zugmaschine beispielsweise in Form eines Lkws angehängt werden können. Dieses Fahrwerk kann auch für den Transport des Turmdrehkrans auf der Baustelle selbst verwendet werden. Zu diesem Zweck wird eine ebenfalls vorhandene und vorzugsweise lenkbare Deichsel an ein geländegängiges Fahrzeug wie beispielsweise einen Bagger angekuppelt, der sodann die Aufgabe übernimmt, den Turmdrehkran bis zu dessen Standort zu ziehen oder zu bugsieren. Hierbei ist oftmals ein vielmaliges und dadurch langwieriges Rangieren erforderlich, insbesondere dann, wenn der Standort des Krans sich in einer Gasse befindet und der Kran daher von der Zugmaschine geschoben werden muß, damit dieselbe anschließend nicht eingebaut ist. Aufgrund derartiger, beengter Verhältnisse muß die Zugmaschine dabei nicht selten im rückwärtigen Bereich des Transportfahrwerks angekuppelt werden, so daß wenigstens zwei kräftige Personen erforderlich sind, um die Deichsel manuell in die gewünschten Richtungen zu lenken. Zusammen mit dem sonstigen, für das Aufstellen des Krans geschulten Personal sind zusammen etwa vier bis fünf Personen über viele Stunden damit beschäftigt, den Turmdrehkran auf sein Fundament zu transportieren. Dabei muß der Kran oftmals den letzten Rest des Weges auf einer Art Luftkissen zurücklegen. Als nächstes schließt sich das exakt horizontale Ausrichten des Unterwagens an, und sodann werden die Füße ausgeschwenkt und mit Spindeln auf das Fundament gelassen. Gegenüber dieser Prozedur ist das eigentliche Aufrichten des Kranmastes und -auslegers vergleichsweise einfach, da hierfür bereits die vielfältigsten Konstruktion ausersonnen wurden, welche das Aufrichten nahezu selbsttätig bewirken, so daß anschließend ausschließlich die einzelnen Kranteile durch Einschlagen von Bolzen verbunden werden müssen. Hierfür ist wie auch zum Führen des Krans nur wenig Personal erforderlich.

Da Turmdrehkräne nicht auf jeder Baustelle benötigt werden und nicht unerhebliche Anschaffungskosten mit sich bringen, werden sie vielfach nur ausgeliehen. Die Verleihfirma stellt hierbei das zum Aufstellen und Bedienen des Krans erforderliche Fachpersonal, ist jedoch bei dem Transport auf der Baustelle auf die Mitwirkung eines Baggers sowie weiterer, starker Männer angewiesen, was nicht selten Koordinationsprobleme mit sich bringt.

Aus diesen Nachteilen des bekannten Stands der Technik resultiert das die Erfindung initiierende Problem, einen Turmdrehkran derart auszubilden, daß insbesondere der Transport auf einer Baustelle bis zu dem ausgesuchten Standort möglichst ohne geländegängige Fahrzeuge durchgeführt werden kann.

Die Lösung dieses Problems gelingt bei einer an einen Turmdrehkran zu dessen Transport auf Straßen anbaubaren Schnellmontagebaugruppe mit wenigstens einer Fahrgestellachse, deren Länge etwa der Breite des Turmdrehkrans entspricht, durch einen an der Schnellmontagebaugruppe angeordneten Motor zum Antrieb einer Fahrgestellachse. Durch den erfindungsgemäßen Motor wird der noch zusammengelegte Turmdrehkran in die Lage versetzt, selbsttätig innerhalb des Baustellengeländes zu manövrieren und ohne Hilfe einer Zugmaschine an den vorgesehenen Standort zu gelangen. Dadurch wird die Kranaufstellung unabhängig von der Verfügbarkeit anderer Baumaschinen, was die Koordinierung erheblich vereinfacht. Da die Bereifung einer erfindungsgemäßen Schnellmontagebaugruppe mit einem geländegängigen Profil versehen ist, können auch Steigungen überwunden werden.

Es hat sich als günstig erwiesen, daß der Motor mit der Fahrgestellachse über eine Schaltkupplung gekoppelt ist. Diese Schaltkupplung dient dazu, den Antriebsmotor während des Straßentransports von der angetriebenen Achse abzukuppeln, damit diese frei laufen kann und den Transport nicht behindert. Für die erfindungsgemäßen Zwecke ist es völlig ausreichend, wenn die Schaltkupplung im Stillstand geschaltet werden kann.

Es liegt im Rahmen der Erfindung, daß die angetriebene Fahrgestellachse ein Differential aufweist. Dieses Differential ermöglicht eine Relativverdrehung der an den gegenüberliegenden Enden der Antriebsachse angeordneten Räder und begünstigt dadurch die Kurvenfahrt des erfindungsgemäßen Turmdrehkrans sowohl während des Straßentransports als auch beim Rangieren auf einer Baustelle.

Weitere Vorteile ergeben sich dadurch, daß der Motor mit der Fahrgestellachse über wenigstens ein Untersetzungsgetriebe gekoppelt ist. Hierdurch ist es möglich, vergleichsweise schnellaufende Motoren wie Verbrennungsmotoren oder Asynchronmotoren mit entsprechend herabgesetztem Drehmoment zu verwenden, wobei durch die drehzahlmäßige Untersetzung eine entsprechende Erhöhung des Drehmoments erreicht wird, so daß ein Motor mit einer Leistung von bspw. 5 kW völlig ausreichend ist, um einen Turmdrehkran auch über abschüssiges oder ansteigendes Gelände zu dem auserwählten Standort zu bewegen.

Eine erste Möglichkeit zur Anordnung eines Untersetzungsgetriebes bietet der Antriebsstrang von dem Motor über die Schaltkupplung bis zu dem Differential. Dabei kann bspw. durch Verwendung eines Schneckengetriebes mit einem geringen Aufwand eine hohe Untersetzung erreicht werden. Darüber hinaus lassen sich sogar Schneckengetriebe verwenden, die selbsthemmend ausgebildet sind, so daß bspw. ein Durchdrehen des Motors an abschüssigem Gelände ausgeschlossen ist.

Eine weitere Möglichkeit zur Realisierung des Untersetzungsgetriebes bieten die Radnaben. Sofern bereits an dieser Stelle eine Untersetzung realisiert ist, kann die Drehmomentbelastung in dem gesamten Antriebsstrang bis einschließlich des Differentials deutlich herabgesetzt werden, so daß sich die Konstruktion vereinfacht und verbilligt und die Lebensdauer erhöht wird.

Weitere Vorteile ergeben sich, wenn der Motor als Verbrennungs- oder Hydraulikmotor oder bevorzugt als Elektromotor ausgebildet ist. Ein Verbrennungsmotor ist völlig unabhängig von einer äußeren Energiequelle und kann daher auch bei völlig entlegenen Baustellen verwendet werden. Hydraulikmotoren können von der Hydraulikanlage eines Fahrzeugs gespeist werden, so daß auch hier eine Unabhängigkeit von zusätzlichen Energiequellen gegeben ist. Dennoch hat ein Elektromotor den Vorteil einer einfachen und robusten Konstruktion, und da ein Turmdrehkran für den Betrieb seiner Laufkatze und seiner Seilwinde ohnehin Starkstrom benötigt, kann das Vorhandensein eines entsprechenden Stromanschlusses vorausgesetzt werden.

Die erfindungsgemäße Konstruktion läßt sich dahingehend weiterbilden, daß der Motor über ein Leistungsstellglied ansteuerbar ist, um die Drehzahl und/oder das Drehmoment des Motors vorzugsweise stufenlos verstellen zu können. Infolge der Untersetzung wird der Turmdrehkran nicht viel schneller als maximal etwa 0,1 bis 10 km/h fahren. Dennoch ist es infolge der großen Masse des Turmdrehkrans, bei welchem nicht selten die Ausgleichsgewichte während des Straßentransports überhaupt nicht demontiert werden, erforderlich, sanft anzufahren bzw. abzubremsen, damit nicht bspw. an Hanglagen od. dgl. infolge des hohen Trägheitsmoments ein unkontrolliertes Kippmoment auftreten kann. Auch erlaubt eine derartige Verstellmöglichkeit eine extreme Langsamfahrt, so daß millimetergenaues Rangieren möglich ist.

Erfindungsgemäß ist das Leistungsstellglied direkt an der Schnellmontagebaugruppe angeordnet. Somit müssen keine zusätzlichen Geräte zu dem Aufstellungsort eines Turmdrehkrans transportiert werden, sondern alle erforderlichen Geräte werden ständig mitgeführt. Dadurch kann als Zugmaschine für den Straßentransport auch ein Fahrzeug ohne Ladefläche Verwendung finden. Außerdem muß solchenfalls die Verschaltung des Motors mit dem Leistungsstellglied niemals aufgetrennt und somit auch während eines Aufstellvorgangs nicht geschlossen werden, so daß eine Fehlerquelle ausgeschaltet ist.

Die Erfindung läßt sich dahingehend weiterbilden, daß der Leistungseingang des Leistungsstellglieds für den Anschluß an ein Starkstromnetz (380 V Drehstrom) und/oder an handelsübliche Generatoren ausgebildet ist. Durch eine derartige Normung ist die erfindungsgemäße Schnellbaumontagegruppe universell einsetzbar und kann vor Ort problemlos in Betrieb genommen werden.

Weitere Vorteile ergeben sich dadurch, daß das Leistungsstellglied fernsteuerbar ausgebildet ist. Hierdurch ist es möglich, daß eine entsprechend geschulte Person neben dem Turmdrehkran laufend ständig die kritischen Bereiche des Rangiervorgangs im Auge hat und bspw. mit dem Fernsteuergerät an ein potentielles Hindernis herantreten kann, um gegebenenfalls frühzeitig eine Verlangsamung der Fahrt einleiten zu können.

Die Erfindung sieht weiterhin vor, daß die Fernsteuerung als Funkfernsteuerung ausgebildet ist. Eine Funkfernsteuerung ist nicht der Gefahr ausgesetzt, daß ein Kabel aus Unachtsamkeit unter eines der Räder geraten und dabei beschädigt werden könnte. Die Bedienungsperson ist dadurch von der Aufgabe befreit, sich ständig um die ordnungsgemäße Lage eines Kabels kümmern zu müssen, und kann ihre volle Aufmerksamkeit der Steuerung des Kranantriebs widmen.

Die erfindungsgemäße Schnellmontagebaugruppe kann weiterhin durch eine Bremseinrichtung für wenigstens eine Achse ergänzt werden. Eine derartige Bremse sollte vorzugsweise als Betriebsbremse ausgebildet sein, um insbesondere während der Rangierfahrt den Turmdrehkran an einer gewünschten Position stillsetzen zu können. Hierbei unterstützt sie gegebenenfalls den Motor und/oder das Getriebe der Anordnung, welche Elemente ansonsten die kinetische Energie des Turmdrehkrans aufnehmen müßten. Als Bremsen kommen alle bekannten Systeme in Betracht, insbesondere Scheiben- und vorzugsweise Trommelbremsen, da letztere in einem vollständig gekapselten Gehäuse angeordnet sind und daher insbesondere bei dem oftmals rauhen Betrieb an Baustellen vor Verschmutzungen sicher sind, wodurch ihre Zuverlässigkeit erhöht wird.

Es hat sich bewährt, die Bremseinrichtung pneumatisch betätigbar auszubilden. Infolge der Kompressibilität der Pneumatik-Druckluft kann die Bremskraft einer Pneumatikbremse besonders fein dosiert werden. Darüber hinaus sind auch hydropneumatische Bremsen einsetzbar, bei denen ein pneumatisch betätigter Zylinder über ein hydraulisches Druckmedium auf die Bremsbacken oder -trommeln der Bremse einwirkt.

Entsprechend der von der Erfindung bevorzugten Pneumatikbremsen empfiehlt es sich, an der Schnellmontagebaugruppe einen Kompressor zur Erzeugung des für die Pneumatik erforderlichen Drucks vorzusehen. Dieser Kompressor kann antriebsmäßig an dieselbe Energiequelle gekoppelt sein wie der Antriebsmotor.

Um einem übermäßigen Druckabfall in dem Pneumatiksystem während der Betätigung der Bremsen vorzubeugen, kann an der Schnellmontagebaugruppe ein Druckbehälter zur Bevorratung des unter Druck stehenden, gasförmigen Mediums angeordnet sein. Dieser Druckbehälter sollte im Vergleich zu dem Betätigungsweg der pneumatischen Bremseinrichtungen vergleichsweise groß gewählt sein, damit sich das Gesamtvolumen bei einer Betätigung nicht merklich verändert. Ein derartiger Druckbehälter kann bspw. dadurch realisiert sein, daß ein Rahmenteil des Fahrgestells als Hohlprofil ausgebildet und bspw. durch aufgeschweißte Endbleche abgeschlossen ist. Hierdurch kann zusätzliches Gewicht fast vollständig eingespart werden.

Weitere Vorzüge bietet eine Anordnung, wobei die Bremseinrichtung fernbedienbar ausgebildet ist, insbesondere über gegebenenfalls funkfernsteuerbare Pneumatikventile. Hierbei sollte das Bedienteil dieser Fernsteuerung mit dem Bedienteil für den Antrieb integriert sein, um bequem von einem Bedienpult aus die Fahrtgeschwindigkeit sowohl beschleunigen als auch abbremsen zu können. Hierbei ist an der erfindungsgemäßen Schnellmontagebaugruppe vorzugsweise eine zentrale Steuerungseinrichtung vorgesehen, welche die verschiedenen Befehle wie Beschleunigen des Antriebsmotors oder Betätigen der Bremse in entsprechende Signale für die betreffenden Stellglieder, bspw. den Gashebel eines Verbrennungsmotors oder ein Pneumatikventil verteilt. Insbesondere kann diese zentrale Steuerungsanlage mit dem Empfänger einer Funkfernsteuerung gekoppelt sein, die für die unterschiedlichen Funktionen jeweils einen eigenen Funkkanal aufweist.

Da die erfindungsgemäße Betriebsbremse auch während des Straßentransports vorteilhaft eingesetzt werden kann, um den angehängten Turmdrehkran schnell abbremsen zu können, sieht die Erfindung weiterhin vor, daß die Bremseinrichtung an die Bremsanlage eines Zugfahrzeugs anschließbar ist. Hierzu kann ein beispielsweise mit einem Rückschlagventil versehener Anschluß für einen Pneumatikschlauch vorgesehen sein, der mit einem entsprechenden Anschluß des Zugfahrzeugs verbunden werden kann, um den von diesem bei einer Abbremsung aufgebauten Bremsdruck auch auf die Bremsanlage des angehängten Turmdrehkrans einwirken lassen zu können.

Ferner zeichnet sich die erfindungsgemäße Schnellmontagebaugruppe durch eine Feststellbremse aus, die wenigstens auf ein Rad, vorzugsweise auf eine Achse einwirkt. Eine derartige Feststellbremse kann bspw. dazu dienen, einen zusammmengelegten Turmdrehkran während einer Lagerung oder vor dem Rangieren auf einer Baustelle vorübergehend festzusetzen. Diese Feststellbremse ist vorzugsweise für eine manuelle Betätigung ausgebildet, bspw. mittels einer Kurbel o. dgl.

Eine vorteilhafte Konstruktion läßt sich dadurch erreichen, daß die Feststellbremse in den Antriebsstrang einer angetriebenen Achse, vorzugsweise vor dem Differential, eingefügt ist. Von hier aus wirkt die Bremse auf beide Antriebsräder, so daß mit einem minimalen Aufwand eine maximale Wirkung erzielt werden kann. Indem die Feststellbremse darüber hinaus vor einem gegebenenfalls untersetzenden Getriebe angeordnet ist, kann darüber hinaus auch die von der Bremse aufzubringende Bremskraft vergleichsweise niedrig sein.

Weitere Vorzüge bringt eine Anordnung mit sich, wobei die Räder einer oder mehrerer Fahrgestellachsen lenkbar ausgebildet sind. Hiermit kann einerseits ein Allradantrieb für einen Turmdrehkran realisiert werden, wobei auch die Räder der gelenkten Achse einen Vortrieb erzeugen, andererseits ist es auch möglich, auf diesem Weg Tandemachsen zu realisieren, um die zumeist im rückwärtigen Bereich eines anhängerartig zusammengefalteten Turmdrehkrans angeordneten Ausgleichsgewichte lastmäßig auf eine entsprechende Anzahl von Achsen zu verteilen, ohne daß diese bei einer Kurvenfahrt insbesondere auf Asphaltstraßen einer übermäßigen Seitenbeanspruchung ausgesetzt werden.

Insbesondere für den letzteren Fall einer Tandemachsenanordnung können die lenkbaren Räder nach Art einer Achsschenkellenkung um etwa vertikale Drehachsen im Bereich der Radaufhängung verschwenkbar ausgebildet sein. Entsprechende Anordnungen sind aus dem Fahrzeugbau beispielsweise für die Realisierung der Vorderachslenkung von Lastkraftwagen bekannt.

Unter Weiterbildung dieses Erfindungsmerkmals lassen sich die lenkbaren Achsschenkel der Räder einer Achse über ein Spurgestänge miteinander koppeln, um eine synchrone Verstellung beider Räder mit nur einem einzigen Aktuator bewirken zu können.

Neben einer Achsschenkellenkung ist auch eine Drehschemellenkung möglich, wobei die lenkbare Achse an einem um eine etwa vertikale Drehachse verschwenkbaren Drehschemel angeordnet ist. Diese Anordnung ist konstruktiv vergleichsweise einfach und erlaubt eine Weiterbildung dahingehend, daß der Drehschemel mit einer Deichsel versehen ist, so daß die Lenkung bei dem Straßentransport auf einfachstem Weg bewirkt werden kann.

Für die Rangierfahrt auf einer Baustelle hat es sich bewährt, daß die verschwenkbaren Achsschenkel und/oder der verschwenkbare Drehschemel mittels Hydraulikzylindern betätigbar sind. Hydraulische Zylinder sind in der Lage, auch bei widrigen Geländeverhältnissen die für die Lenkung erforderlichen Kräfte aufzubringen, so daß weiteres Hilfspersonal entbehrlich ist.

Das nötige Druckgefälle innerhalb des Hydraulikkreislaufs läßt sich mit einer an der Schnellmontagebaugruppe angeordneten Pumpe erzeugen, die ihre Primärenergie vorzugsweise aus derselben Energiequelle bezieht wie der erfindungsgemäße Antriebsmotor.

Die erfindungsgemäße Pumpe saugt die Hydraulikflüssigkeit vorzugsweise aus einem Vorratstank, der an der Schnellmontagebaugruppe angeordnet ist, und in welchen das Hydraulikmedium nach Verrichtung seiner Arbeit wieder zurückströmt. Dieser Vorratstank kann wie auch der Luftkessel für die Bremspneumatik durch ein profilartiges Rahmenteil des Fahrgestells gebildet sein, das an seinen stirnseitigen Enden durch je eine vorzugsweise aufgeschweißte Metallplatte abgeschlossen ist.

Wie der Antriebsmotor und/oder die Betriebsbremse, so sollte auch die Lenkung fernbedienbar ausgebildet sein, damit von einem einzigen Bedienpult aus sämtliche Fahrfunktionen ausgelöst werden können. Indem die Fernbedienung darüber hinaus als Funkfernsteuerung realisiert ist, ergibt sich eine gegenüber versehentlichen Beschädigungen weitgehend sichere Anordnung, die auch dem mitunter rauhen Betrieb auf Baustellen gewachsen ist. Im Rahmen der Erfindung ist es dabei möglich, die betreffenden Lenkinformation über einen weiteren Funkkanal zu einer Empfangseinrichtung der Schnellmontagebaugruppe zu senden, von wo ein zentraler Steuerbaustein eine entsprechende Betätigung der Hydraulikventile für die Lenkung auslöst.

Insbesondere bei Turmdrehkränen mit einem hohen Ausgleichsgewicht, welches während des Straßentransports nicht demontiert wird, und welche deshalb mit einer rückwärtigen Tandemachse transportiert werden, kann die hinterste Achse mit einer Achsschenkellenkung versehen sein, während gleichzeitig die Vorderachse mit einer durch die Deichsel gesteuerten Drehschemellenkung zum Straßentransport versehen ist. Für eine derartige Anordnung kann insbesondere die Lenkung für die hinterste Achse mit einem Steuereingang zum Anschluß eines Sensors versehen sein, der den Lenkeinschlag der Zugdeichsel oder alternativ den Lenkeinschlag eines Zugfahrzeugs sensiert. Dadurch können auch große und schwere Kräne auf engen Landstraßen bequem bis zu ihrem Einsatzort transportiert werden.

Wie eingangs bereits angedeutet, ist es für den sicheren Betrieb eines Turmdrehkrans von großer Bedeutung, daß der Unterwagen exakt horizontal ausgerichtet ist, damit der Turm exakt vertikal und damit kippsicher emporragt. Diesem Zweck dient eine erfindungsgemäße Weiterbildung, wobei die Schnellmontagebaugruppe mit in vertikaler Richtung verstellbaren Abstützelementen versehen ist. Sobald der Turmdrehkran mit seinem Unterwagen die vorgesehene Position eingenommen hat, kann dieser zunächst provisorisch mit den erfindungsgemäßen Abstützelementen derart ausgerichtet werden, daß sein Unterwagen waagerecht orientiert ist. Sobald diese Justierung abgeschlossen ist, können die eigentlichen Standfüße von dem Untergestell ausgeschwenkt und sodann durch Betätigung von Spindelelementen bis zu dem betreffenden Untergrund abgesenkt werden, was rein manuell geschehen kann.

Demgegenüber kann die Verstellung der erfindungsgemäßen Abstützelemente durch einen oder mehrere, mit Hilfsenergie versorgte Aktuatoren bewirkt werden, damit dieser Vorgang besonders feinfühlig erfolgen kann.

Die Erfindung empfiehlt die Verwendung von Hydraulikzylindern als Aktuatoren, da dieselben durch Schließen der Ventile in jeder beliebigen Zwischenstellung fixiert werden können, ohne daß zusätzliche Feststelleinrichtungen erforderlich sind.

Schließlich entspricht es der Lehre der Erfindung, daß die Aktuatoren zur Betätigung der erfindungsgemäßen Abstützelemente fernbedienbar ausgebildet sind. Hierdurch ist es einer Bedienperson möglich, ihren Blick auf ein Wasserwaagenelement zu richten und von dem Handbedienpult aus die erforderlichen Höhenverstellungen auszulösen. Auch für diese Fernbedienung empfiehlt sich eine Funkfernsteuerung, die über einen oder mehrere Funkkanäle, eine in der Schnellmontagebaugruppe angeordnete Empfangseinheit sowie gegebenenfalls eine nachgeschaltete Steuerbaugruppe auf Hydraulikventile einwirkt, die in die Zuleitungen der hydraulischen Aktuatoren eingeschaltet sind.

Weitere Merkmale, Einzelheiten, Vorteile und Wirkungen auf der Basis der Erfindung ergeben sich aus der nachfolgenden Beschreibung einiger bevorzugter Ausführungsbeispiele der Erfindung sowie anhand der Zeichnung. Diese zeigt in:
- Fig. 1: einen zum Straßentransport zusammengefalteten Turmdrehkran mit einer lösbar angebauten, angetriebenen Hinterachse;
- Fig. 2: eine Draufsicht auf die Hinterachs-Baugruppe nach Fig. 1 in demontiertem Zustand, teilweise abgebrochen;
- Fig. 3: eine perspektivische Rückansicht auf die Schnellmontagebaugruppe aus Fig. 2;
- Fig. 4: eine schematische Seitenansicht auf die Schnellmontagebaugruppe nach Fig. 2 nach Demontage der Bereifung;
- Fig. 5: eine perspektivische Ansicht der lenkbaren Schnellmontagebaugruppe aus Fig. 1; sowie
- Fig. 6: eine schematische Draufsicht auf die angetriebene Achse einer Schnellmontagebaugruppe mit Achsschenkellenkung.

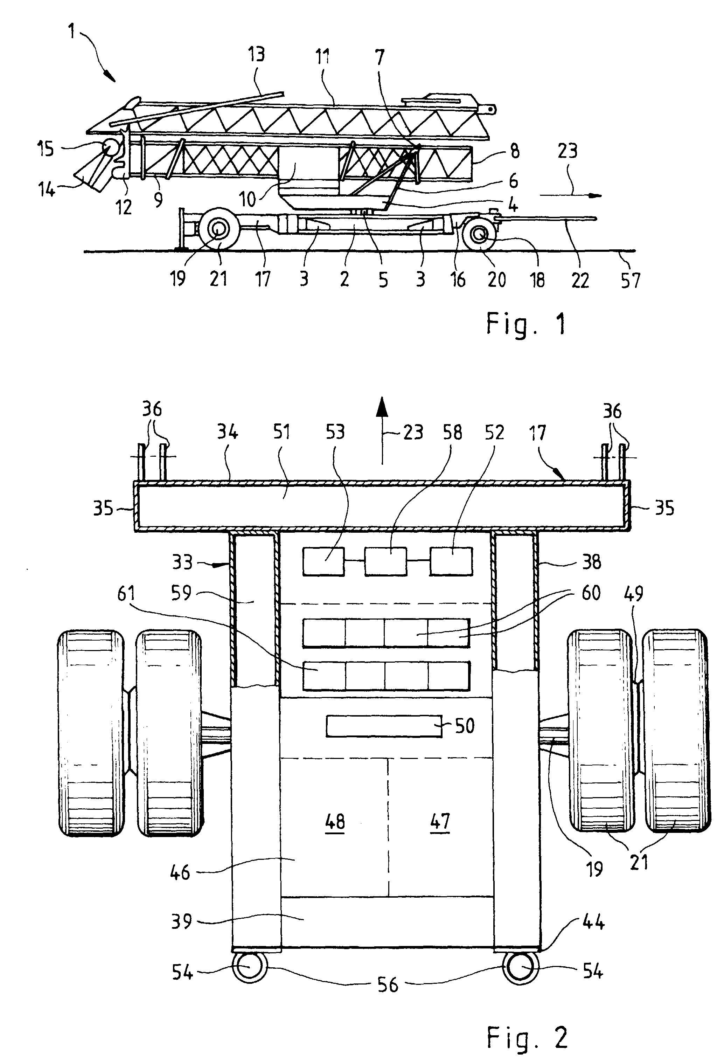

Bei dem in der Fig. 1 widergegebenen Turmdrehkran 1 handelt es sich um einen untendrehenden Turmdrehkran mit einer Hubhöhe von etwa 19 Metern, einer Ausladung von maximal 24 m bei einer Traglast von 650 kg, die sich im rückwärtigen Bereich des Auslegers auf maximal 2.000 kg erhöht. Der Kran ist auf einem Unterwagen 2 von etwa rechteckiger Grundfläche aufgebaut, an dessen Ecken je ein ausschwenkbarer Ausleger 3 mit einem Standfuß angeordnet ist. Jeder Standfuß umfaßt ein etwa spindelartiges Bein, das in einer mit Innengewinde versehenen Ausnehmung des Auslegers schraubverstellbar aufgenommen und geführt ist und an seiner Unterseite einen Teller aufweist. Auf dem Unterwagen 2 ist ein Oberwagen 4 um eine vertikale Achse 5 drehbar angeordnet. Nahe der Drehachse 5 ist mittels zweier seitlicher Dreiecksstützen 6 eine horizontale Schwenkachse 7 getragen, um die der zusammengelegte Kranaufbau 8 von der vertikalen Betriebsposition in die horizontale Transportposition gemäß Fig. 1 verschwenkt werden kann. In der liegenden Position gelangt dabei der Außenmast 9 des teleskopisch zusammengefahrenen Turms in die etwa U-förmige Aufnahme 10 für den Betonballast. Dieser bildet im aufgebauten Zustand des Turmdrehkrans 1 das Ausgleichsgewicht für den Ausleger, der bei dem Turmdrehkran 1 aus dem Auslegeranlenkstück 11 gebildet ist, das um eine im Bereich der Turmspitze 12 angeordnete Achse an den Außenmast herangeschwenkt ist, und aus einer etwa gleichlangen Auslegerspitze, die sich in der Seitenansicht nach Fig. 1 hinter bzw. neben dem Auslegeranlenkstück 11 befindet. Während die teleskopisch ineinanderschiebbaren Teile des Turms einen etwa quadratischen Querschnitt aufweisen, verfügt der Ausleger über einen etwa dreieckigen Querschnitt, und Mast 9 sowie Ausleger 11 sind jeweils durch fachwerkartig miteinander verstrebte Längsprofile gebildet.

Ferner ist eine an der Turmspitze 12 montierbare Stütze 13 für das Auslegertragseil vorhanden sowie eine an einem gegenüber der Turmspitze 12 ausschwenkbaren Ausleger 14 angeordnete Umlenkrolle 15, über welche das Auslegertragseil während des Hochziehens des Auslegers 11 geführt ist.

Um den Turmdrehkran 1 in der wiedergegebenen, zusammengelegten Position von einer Baustelle zur anderen zu transportieren, kann an der Vorder- und Rückseite des Unterwagens 2 je eine Baugruppe 16, 17 mit jeweils einer Achse 18, 19 und entsprechender Bereifung 20, 21 angebolzt werden. Hierbei ist die an der Vorderseite des Unterwagens 2 anbaubare Baugruppe 16 mit einer Deichsel 22 zum Anhängen an eine Zugmaschine versehen, welche mit einem Drehschemel für die Vorderachse 18 zu deren Lenkverstellung gekoppelt ist. Durch Anbau der Baugruppen 16, 17 wird der Unterwagen 2 des zusammengelegten Turmdrehkrans 1 zu einem straßengängigen Fahrwerk ergänzt, so daß der Turmdrehkran von einem Kraftfahrzeug zur nächsten Baustelle 23 gezogen werden kann.

An einer Baustelle angelangt, muß das Zugfahrzeug üblicherweise abgekuppelt werden, da dieses zumeist nicht ausreichend geländegängig ist, um den auch ohne Ballast mehrere Tonnen schweren Kran über teilweise unwegsames Gelände bis zu dessen ausgesuchten Standort zu transportieren. Diese Aufgabe übernimmt zumeist ein Bagger oder ähnliches geländegängiges Fahrzeug, welches überdies zumeist an der Hinterachse 19 schieben muß, damit der Kran an seiner endgültigen Position nicht das Zugfahrzeug blockiert, während die Deichsel 22 von mehreren starken Männern gelenkt wird. Um diese umständliche Prozedur zu vereinfachen, ist bei der in den Fig. 1 bis 4 wiedergegebenen Hinterachs-Baugruppe 17 ein Antriebsmotor 24 vorgesehen, der über eine Schaltkupplung 25 an die Hinterachse 19 zu deren Antrieb gekoppelt werden kann. Da die Reifen 21 jeweils als Zwillingsreifen ausgebildet sind mit einer starken, geländegängigen Profilierung 26, ist es dadurch möglich, den zusammengelegten Turmdrehkran 1 über das unwegsame Baustellengelände selbsttätig bis zu dessen Standort zu fahren.

Um bereits mit einem verhältnismäßig kleinen Antriebsmotor 24 von bspw. 5 kW Leistung den tonnenschweren Turmdrehkran 1 auch über Steigungen fahren zu können, ist ein Untersetzungsgetriebe vorgesehen, welches die vergleichsweise hohe Drehzahl des Antriebsmotors 24 von bis zu 5.000 U/min auf eine vergleichsweise langsame, aber kraftvolle Umdrehung der Zwillingsreifen 21 umsetzt. Dieses Untersetzungsgetriebe kann vorzugsweise als Schneckengetriebe 27 realisiert sein, dessen Schnecke 28 an der Antriebswelle des Motors 24 unverdrehbar festgelegt ist. Die Schnecke 28 kämmt mit einem Schneckenrad oder einer mit Zähnen versehenen Walze, die mit der Eingangswelle 29 der Schaltkupplung 25 gekoppelt ist. Die Ausgangswelle 30 der Schaltkupplung 25 führt zu einem Differential 31, das die Antriebsleistung auf die Hinterachse 19 überträgt und insbesondere zur Erleichterung der Kurvenfahrt eine Relativverdrehung zwischen den beiden Reifenpaaren 21 ermöglicht. Ein weiteres Untersetzungsgetriebe kann im Bereich jedes der beiden Zwillingsreifen 21 angeordnet und beispielsweise als Außenplanetengetriebe 32 ausgebildet sein. Zwei derartige, im Bereich der beiden Enden der Hinterachse 19 angeordnete Außenplanetengetriebe 32 halten die hohen Drehmomente, welche bspw. während einer Bergauffahrt zu überwinden sind, von dem Differential 31 und von der Schaltkupplung 25 fern und erhöhen dadurch deren Lebensdauer.

Obwohl der Antriebsmotor 24 sowohl als Verbrennungsmotor als auch als Hydraulikmotor realisiert sein kann und dadurch weitgehend autark von äußeren Energiequellen wäre, sieht die Erfindung dennoch vor, als Antriebsmotor 24 einen Elektromotor zu verwenden, da zum Betrieb der verschiedenen Einrichtungen eines Turmdrehkrans ohnehin ein Starkstromanschluß vorhanden sein muß und daher gegebenenfalls derselbe zur Versorgung des Antriebsmotors 24 mit Strom verwendet werden kann. Hierbei eignen sich robuste Asynchronmotoren, da dieselben aufgrund moderner Steuerungs- und Regelungstechnik und mit elektronischen Leistungsstellgliedern höchst präzise gesteuert werden können und sogar eine Lageregelung zulassen. Die Erfindung sieht weiterhin vor, daß auch das Leistungsstellglied zur Veränderung der Drehzahl und/oder Drehstellung des als Elektromotor ausgebildeten Antriebsaggregats 24 an der Baugruppe 17 angebaut ist.

Die Baugruppe 17 umfaßt ein Fahrgestell 33, das sich auf der Achse 19 abstützt und zum Anbau an den Unterwagen 2 des Turmdrehkrans 1 mit einem Querträger 34 versehen ist, dessen Länge etwa der Breite des Unterwagens 2 entspricht, und der an genormten Positionen im Bereich seiner beiden Enden 35 mit zur Fahrtrichtung 23 parallelen Laschen 36 versehen ist, die miteinander fluchtende Augen 37 aufweisen, welche mit entsprechenden Laschenösen des Unterwagens 2 derart ausgerichtet werden können, daß quer zur Fahrtrichtung verlaufende Bolzen eingesteckt werden können, um die Baugruppe 17 schnell an den Unterwagen 2 des Turmdrehkrans 1 montieren zu können. An der den Laschen 36 gegenüberliegenden Seite des Querträgers 34 sind zwei in Fahrtrichtung 23 verlaufende Längsträger 33 angeschweißt, die an ihrem rückwärtigen Ende durch einen weiteren Querträger 39 miteinander verstrebt sind. Etwa in der Mitte der Unterseiten 40 der beiden Längsträger 38 ist die Achse 19 festgeschraubt 41. Von deren Unterseite erstreckt sich je ein zweiter, verkürzter Längsträger 42 bis unterhalb des rückwärtigen Endes 43 des betreffenden Hauptlängsträgers 38 und ist dort mit diesem über eine vertikale Metallplatte 44 verschweißt. Da auch die beiden Hilfslenksträger 42 im rückwärtigen Bereich miteinander verstrebt 45 sind, ergibt sich insgesamt eine äußerst verwindungssteife Anordnung, die auch das Befahren von äußerst unwegsamem Gelände zuläßt.

Bei der vorliegenden Anordnung ist der Antriebsmotor 24 mit quer zur Fahrtrichtung 23 verlaufender Längsachse seitlich an dem Schneckengetriebe 27 angeflanscht, welches zwischen den beiden hinteren Querträgern 39, 45 gehalten ist. Das Kupplungsgehäuse 25 kann bspw. im Bereich eines Längsträgers 38, 42 verankert sein.

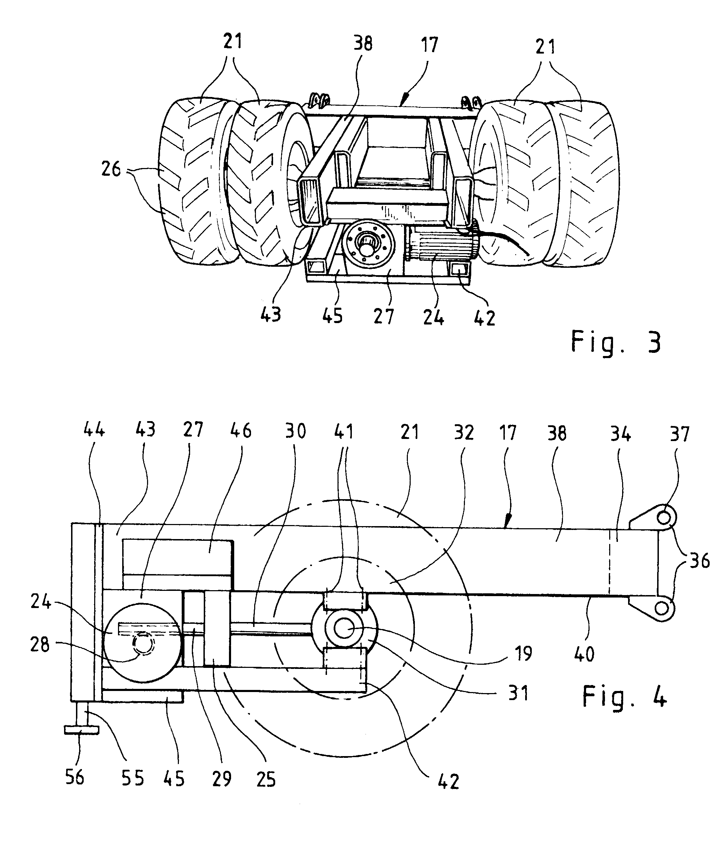

Wie Fig. 3 zeigt, sind die Hauptlängsträger 38 im Bereich des rückwärtigen Querträgers 39 an ihrer Innenseite ausgespart, damit auf dem Träger 39 ein Elektroschaltschrank 46 Platz findet. Innerhalb desselben kann bspw. ein Starkstromteil 47 mit einem Leistungsstellglied für den Elektromotor 24 vorgesehen sein sowie ein Elektronikteil 48, in welchem die elektrischen Steuerfunktionen der erfindungsgemäßen Baugruppe 17 zusammengefaßt sind. Hier findet auch der Empfänger einer Funkfernsteuerung Platz, über welchen Befehle von einem tragbaren Handpult aus zu der Steuerbaugruppe 48 übertragen werden können, welche entsprechend das Leistungsstellglied 47 beeinflußt, um die Drehzahl und/oder den Drehwinkel des Elektromotors 24 einem vorgegebenen Wert nachzuführen.

Die Baugruppe 17 ist ferner mit einer Betriebsbremse für die beiden Halbachsen 19 versehen, welche vorzugsweise als pneumatisch zu betätigende Trommelbremsen ausgebildet sind, welche auch bei dem rauhen Betrieb auf Baustellen kaum der Gefahr einer Verschmutzung ausgesetzt sind und ihre Aufgabe daher zuverlässig erfüllen können.

Die Felgen 49 zweier benachbarter Zwillingsreifen 21 sind querschnittlich zueinander abgekröpft und zu einem einzigen Felgenkörper miteinander verbunden. Dieser ist an dem langsamer drehenden Teil eines koaxial innerhalb der Räder 21 angeordneten Planetengetriebes festgelegt, und an die Innenseite dieses Getriebes anschließend ist eine in Fig. 2 durch den jeweils innenliegenden Reifen 21 verdeckte Trommelbremse angeordnet. Die Ansteuerung dieser Trommelbremsen erfolgt über Bremsventile 50, die von der Steuerung 48 betätigt werden und den Bremsdruck regeln. Die Bremsventile 50 sind dabei eingangsseitig an einen Luftkessel 51 angeschlossen, in welchem ein ausreichendes Druckluftvolumen bevorratet ist. Als Luftkessel 51 dient hierbei der Querträger 34, der aus Stabilitätsgründen aus einem massiven Vierkantprofil gebildet ist und zur Abdichtung im Bereich seiner beiden, stirnseitigen Enden durch je eine aufgeschweißte Metallplatte 35 abgeschlossen ist. Um auch nach mehreren Bremsvorgängen den Luftdruck innerhalb des Luftkessels 51 aufrechtzuerhalten, ist dieser mit einem Kompressor 52 gekoppelt, der von einem zwischen den beiden Längsträgern 38 angeordneten Elektromotor 53 angetrieben wird. Der Kompressor 52 kann über eine Zweipunktregelung gemäß dem Luftdruck innerhalb des Luftkessels 51 betrieben werden, oder aber er wird kontinuierlich betrieben, während an dem Luftkessel 51 ein Überdruckventil angeordnet ist.

Um die Betriebsbremse auch während der Straßenfahrt nutzen zu können, lassen sich die Bremsleitungen auch an die Bremsanlage eines Zugfahrzeugs anschließen.

Ferner sind an den stirnseitigen, vertikalen Abschlußplatten 44 der Längsträger 38, 42 vertikale Hubzylinder 54 angeordnet, deren Kolben 55 nach unten ausfahrbar sind und an ihren Enden tellerartige Füße 56 tragen. Die beiden Hubzylinder 54 können den Turmdrehkran 1 gegenüber dem Erdboden 57 abstützen, um den Unterwagen 2 nach Erreichen des vorgesehenen Standorts exakt horizontal ausrichten zu können. Hierzu ist eine individuelle Ansteuerung der beiden Zylinder 54 sowie gegebenenfalls weiterer, ähnlicher Zylinder der mit nicht angetriebenen Rädern 20 versehenen Vorderachsbaugruppe 16 vorgesehen. Aufgrund der tonnenschweren, anzuhebenden Last sowie der Notwendigkeit einer exakten Justierung wird hierzu eine Hydraulik verwendet. Den notwendigen Hydraulikdruck liefert eine Hydraulikpumpe 58, die ebenfalls mit dem Elektromotor 53 antriebsmäßig gekoppelt ist und dabei das Hydrauliköl aus einem Vorratsbehälter saugt und in die Vorlaufleitung fördert. Als Vorratstank 59 für das Hydrauliköl dient hierbei einer der beiden Hauptlängsträger 38, der zu diesem Zweck als Hohlprofil ausgebildet und stirnseitig abgeschlossen ist. Die Hydraulikventile 60 können gegebenenfalls über Luftventile 61 von der Steuerung 48 betätigt werden. Sämtliche Funktionen wie Anfahren, Beschleunigen, Bremsen und Ausrichten mit Hilfe der Abstützelemente 54 können funkferngesteuert ausgelöst werden.

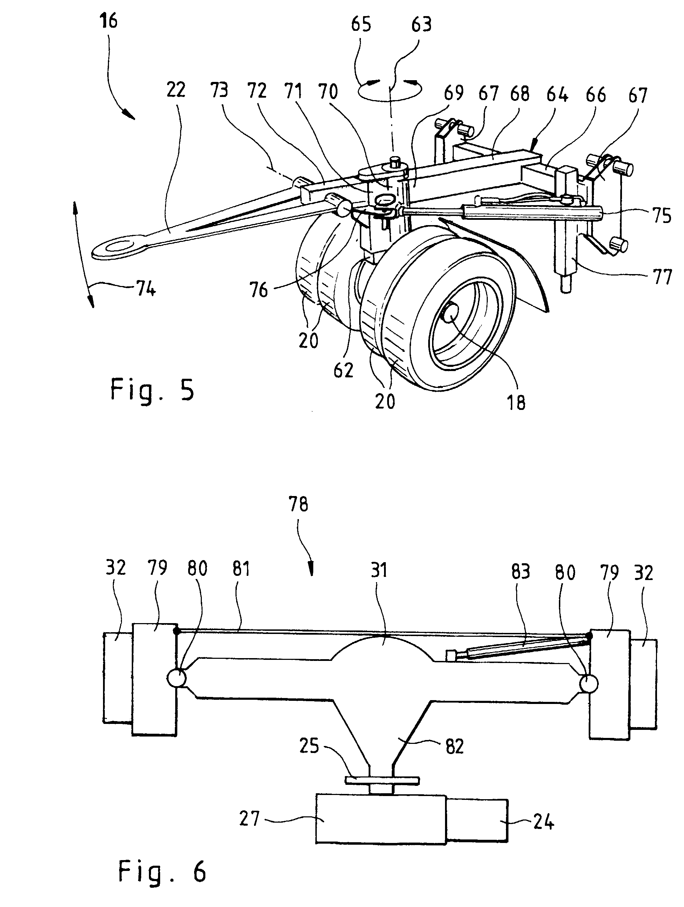

Fig. 5 zeigt eine perspektivische Ansicht der lenkbaren Vorderachsbaugruppe 16. Man erkennt die starre, nicht angetriebene Vorderachse 18 mit Zwillingsreifen 20 an jedem ihrer beiden Enden. In der Mitte der relativ kurzen Achse 18 befindet sich eine Aufhängung 62, die nach Art eines Drehschemels um eine etwa vertikale Achse 63 gegenüber dem Fahrwerk 64 verdrehbar 65 ist. Zu diesem Zweck ist an dem Fahrwerksrahmen 64, der aus einem Querträger 66 mit endseitig angeschweißten Laschen 67 zum Anbolzen an der Vorderseite des Kranunterwagens 2 sowie aus einem zentralen Längsträger 68 gebildet ist, im Bereich des rückwärtigen Endes 69 des Längsträgers 68 eine vertikale Achse 70 angeordnet, an deren ober- und unterseitigen Enden der die Aufhängung 62 tragende Drehschemel 71 angelenkt ist. Der Drehschemel 71 ist ferner mit einem in Fahrtrichtung 23 weisenden Fortsatz 72 versehen, an dem die Deichsel 22 um eine querverlaufende Achse 73 verschwenkbar 74 angelenkt ist.

Während es nach dem vorbekannten Stand der Technik notwendig ist, daß zum Lenken während des Rangierens auf einer Baustelle mehrere starke Männer an der Deichsel 22 anfaßten und manuell den Lenkeinschlag des Drehschemels 71 korrigierten, falls der Turmdrehkran 1 von einem Fahrzeug geschoben wurde, sind erfindungsgemäß zur Betätigung der Lenkung Hydraulikzylinder 75 vorgesehen, welche vorzugsweise mit ihrem Gehäuse an je einem Außenbereich 67 des Fahrwerksquerträgers 66 einerseits sowie vorzugsweise mit ihrem verstellbaren Kolbenelement an einer seitlich auskragenden Lasche 76 des Drehschemels 71 andererseits angelenkt sind. Bei Verwendung von zwei Hydraulikzylindern 75 können die beiden jeweils einfach wirkend ausgebildet sein, so daß zur Verstellung der Lenkung je ein Hydraulikzylinder betätigt wird, während der andere durch die Verstellung des Lenkeinschlags entsprechend zurückgefahren wird. Falls nur ein Hydraulikzylinder 75 verwendet wird, so muß dieser doppelt wirkend ausgebildet sein, um Lenkausschläge in beide Richtungen zu ermöglichen. Um den Ansteuerungsaufwand für den Lenkungszylinder 75 sowie für gegebenenfalls weitere, als Hydraulikzylinder ausgebildete Abstützelemente 77 zu minimieren, können diese Zylinder hydraulisch mit der Hinterachs-Baugruppe 17 gekoppelt sein, wo sie ferngesteuert 48 über Hydraulikventile 60 mit der Hydraulikpumpe 58 gekoppelt werden, so daß sämtliche Steuerungsbefehle von einem einzigen Handbedienpult aus gegeben werden können.

Neben dem in Fig. 1 wiedergegebenen Turmdrehkran 1, bei welchem der Ballast zumindest teilweise während des Transports abgenommen wird, sind auch Turmdrehkräne bekannt, bei welchen der Ballast während des Transports auf dem Oberwagen 4 verbleiben kann, so daß sich ein hohes Transportgewicht insbesondere im Bereich der hinteren Schnellmontagebaugruppe 17 ergibt. Um dieses aufzufangen, sieht die Erfindung vor, daß bei derartig schweren Kränen zwischen der Hinterachs-Baugruppe 17 und dem Unterwagen 2 eine aus dem Stand der Technik bekannte, vorzugsweise nicht angetriebene Achsbaugruppe eingefügt wird, wodurch die Tragkraft im Bereich des Ballastes etwa verdoppelt werden kann. Hierdurch ergeben sich jedoch Lenkungsprobleme, wenn keine der beiden Hinterachsen lenkbar ausgebildet ist. Deswegen sieht die Erfindung für diesen Fall vor, daß in der Hinterachs-Baugruppe 17 anstelle der nicht lenkbaren Achse 19 die lenkbare Achse 78 gemäß Fig. 6 eingebaut ist.

Diese Baugruppe kann hinsichtlich Antriebsmotor 24, Untersetzungsgetriebe 27, Schaltkupplung 25, Differential 31 sowie Außenplanetengetriebe 32 und Bremstrommeln 79 ähnlich der Achse 19 ausgebildet sein, jedoch ist zusätzlich dazu eine Achsschenkellenkung vorgesehen mit etwa vertikalen Schwenk- bzw. Lenkachsen 80 ober- und unterhalb der Antriebswelle innerhalb der Antriebsachse 78. Die Achsschenkellenkung 80 kann nach bekannten Konstruktionsprinzipien aufgebaut sein. Zur Vereinfachung der Ansteuerung sind beide lenkbaren Achsschenkel 79, 32 über eine Spurstange 81 miteinander gekoppelt, welche etwa an der dem Antriebsstrang 82 gegenüberliegende Seite der Antriebsachse 78 angeordnet ist und eine Parallelverstellung der beiden Achsschenkel 79, 32 sicherstellt. Solchenfalls ist nur ein einziger Hydraulikzylinder 83 erforderlich, der etwa parallel zu der Spurstange 81 ausgerichtet ist und mit seinen beiden, gegeneinander verstellbaren Elementen an der Antriebsachse 78 etwa im Bereich des Differentials 31 einerseits sowie an einem der beiden lenkbaren Achsschenkel 79 peripher in Bezug auf die betreffende Schwenkachse 80 angelenkt ist. Auch der Hydraulikzylinder 83 kann über Ventile 60 der bordeigenen Hydraulik ferngesteuert werden.

Damit die Lenkung 83 auch während des Straßentransports betätigt werden kann, sollte sie möglichst automatisch ansteuerbar ausgeführt sein. Hierzu ist an der Steuerbaugruppe 48 ein zusätzlicher Eingang vorgesehen, an den ein Sensor angeschlossen werden kann, der die Drehstellung 65 der Deichsel 22 abfühlt und daher den Lenkeinschlag des Vorderachs-Drehschemels 71 sensiert. Dieser Lenkausschlag wird von der Steuerbaugruppe 48 in einen entsprechenden Lenkausschlag der Achsschenkellenkung 80 umgerechnet und der Hydraulikzylinder 83 entsprechend verstellt.

## Patentansprüche

1. An einen Turmdrehkran (1) zu dessen Transport auf Straßen anbaubare Schnellmontagebaugruppe (16,17) mit wenigstens einer Fahrgestellachse (18,19,78), deren Länge in etwa der Breite des Turmdrehkrans (1) entspricht, gekennzeichnet durch einen an der Schnellmontagebaugruppe 16,17) angeordneten Motor (24) zum Antrieb einer Fahrgestellachse (19,78).

2. Schnellmontagebaugruppe nach Anspruch 1, dadurch gekennzeichnet, dass der Motor (24) mit der Fahrgestellachse (19,78) über eine Schaltkupplung (25) gekoppelt ist.

3. Schnellmontagebaugruppe nach Anspruch 1 oder 2, dadurch gekennzeichnet, dass die angetriebene Fahrgestellachse (19,78) ein Differential (31) aufweist.

4. Schnellmontagebaugruppe nach einem der Ansprüche 1 bis 3, dadurch gekennzeichnet, dass der Motor (24) mit der Fahrgestellachse (19,78) über wenigstens ein Untersetzungsgetriebe gekoppelt ist.

5. Schnellmontagebaugruppe nach Anspruch 4, dadurch gekennzeichnet, dass ein Untersetzungsgetriebe in den Antriebsstrang (82) eingefügt und vorzugsweise als Schneckengetriebe (27) ausgebildet ist.

6. Schnellmontagebaugruppe nach Anspruch 4 oder 5, dadurch gekennzeichnet, dass Untersetzungsgetriebe an den Radnaben (49) angeordnet und vorzugsweise als Planetengetriebe (32) ausgebildet sind.

7. Schnellmontagebaugruppe nach einem der vorhergehenden Ansprüche, dadurch gekennzeichnet, dass der Motor (24) als Verbrennungs- oder Hydraulikmotor oder bevorzugt als Elektromotor ausgebildet ist.

8. Schnellmontagebaugruppe nach Anspruch 7, dadurch gekennzeichnet, dass der Motor (24) über ein Leistungsstellglied (47) ansteuerbar ist, um die Drehzahl und/oder das Drehmoment des Motors (24) vorzugsweise stufenlos verstellen zu können.

9. Schnellmontagebaugruppe nach Anspruch 8, dadurch gekennzeichnet, dass das Leistungstellglied (47) an der Schnellmontagebaugruppe (17) angeordnet (46) ist.

10. Schnellmontagebaugruppe nach Anspruch 8 oder 9, dadurch gekennzeichnet, dass der Leistungseingang des Leistungsstellglieds (47) für den Anschluß an ein Starkstromnetz (380 V Drehstrom) und/oder an handelsübliche Generatoren ausgebildet ist.

11. Schnellmontagebaugruppe nach einem der Ansprüche 8 bis 10, dadurch gekennzeichnet, dass das Leistungsstellglied (47) fernsteuerbar ausgebildet ist.

12. Schnellmontagebaugruppe nach Anspruch 11, dadurch gekennzeichnet, dass die Fernsteuerung als Funkfernsteuerung ausgebildet ist.

13. Schnellmontagebaugruppe nach einem der vorhergehenden Ansprüche, dadurch gekennzeichnet, dass wenigstens eine Achse (19,78) mit einer Bremseinrichtung (79) gekoppelt ist.

14. Schnellmontagebaugruppe nach Anspruch 13, dadurch gekennzeichnet, dass die Bremseinrichtung (79) pneumatisch betätigbar (50) ausgebildet ist.

15. Schnellmontagebaugruppe nach Anspruch 14, gekennzeichnet durch einen an der Schnellmontagebaugruppe (17) angeordneten Kompressor (52) zur Erzeugung des für die Pneumatik erforderlichen Drucks.

16. Schnellmontagebaugruppe nach Anspruch 14 oder 15, gekennzeichnet durch einen an der Schnellmontagebaugruppe (17) angeordneten Druckbehälter (51) zur Bevorratung eines gasförmigen Druckmediums.

17. Schnellmontagebaugruppe nach Anspruch 16, dadurch gekennzeichnet, dass der Druckbehälter (51) mit einem als Profil ausgebildeten Rahmenteil (34) des Fahrgestells (33) integriert ist.

18. Schnellmontagebaugruppe nach einem der Ansprüche 13 bis 17, dadurch gekennzeichnet, dass die Bremseinrichtung (79) fernbedienbar ausgebildet ist, insbesondere über gegebenenfalls funkfernsteuerbare Pneumatikventile (50).

19. Schnellmontagebaugruppe nach einem der Ansprüche 13 bis 18, dadurch gekennzeichnet, dass die Bremseinrichtung (79) an die Bremsanlage eines Zugfahrzeugs anschließbar ist.

20. Schnellmontagebaugruppe nach einem der vorhergehenden Ansprüche, gekennzeichnet durch eine auf eine Achse einwirkende Feststellbremse.

21. Schnellmontagebaugruppe nach Anspruch 20, dadurch gekennzeichnet, dass die Feststellbremse in den Antriebsstrang (82) einer angetriebenen Achse (19,78), vorzugsweise vor dem Differential (31), eingefügt ist.

22. Schnellmontagebaugruppe nach einem der vorhergehenden Ansprüche, dadurch gekennzeichnet, dass die Räder (20,21) einer oder mehrerer Fahrgestellachsen (18,78) lenkbar ausgebildet sind.

23. Schnellmontagebaugruppe nach Anspruch 22, dadurch gekennzeichnet, dass die lenkbaren Räder (21) nach Art einer Achsschenkellenkung um etwa vertikale Drehachsen (80) im Bereich der Radaufhängung verschwenkbar ausgebildet sind.

24. Schnellmontagebaugruppe nach Anspruch 23, dadurch gekennzeichnet, dass die lenkbaren Achsschenkel (79,32) der Räder (21) einer Achse (78) über ein Spurgestänge (81) miteinander gekoppelt sind.

25. Schnellmontagebaugruppe nach Anspruch 22, dadurch gekennzeichnet, dass die lenkbare Achse (18) nach Art einer Drehschemellenkung an einem um eine etwa vertikale Drehachse (63) verschwenkbaren Drehschemel (71) angeordnet ist.

26. Schnellmontagebaugruppe nach Anspruch 25, dadurch gekennzeichnet, dass der Drehschemel (71) mit einer Deichsel (22) versehen ist.

27. Schnellmontagebaugruppe nach einem der Ansprüche 22 bis 26, dadurch gekennzeichnet, dass die verschwenkbaren Achsschenkel (79,32) und/oder der verschwenkbare Drehschemel (71) mittels Hydraulikzylindern (83,75) betätigbar ist.

28. Schnellmontagebaugruppe nach Anspruch 27, gekennzeichnet durch eine an der Schnellmontagebaugruppe (17) angeordnete Pumpe (58) zur Erzeugung des für die Hydraulik erforderlichen Drucks.

29. Schnellmontagebaugruppe nach einem der Ansprüche 27 oder 28, gekennzeichnet durch einen an der Schnellmontagebaugruppe (17) angeordneten Behälter (59) zur Bevorratung eines flüssigen Druckmediums.

30. Schnellmontagebaugruppe nach Anspruch 29, dadurch gekennzeichnet, dass der Vorratsbehälter (59) mit einem als Profil ausgebildeten Rahmenteil (38) des Fahrgestells (33) integriert ist.

31. Schnellmontagebaugruppe nach einem der Ansprüche 22 bis 30, dadurch gekennzeichnet, dass die Lenkung (75,83) fernbedienbar ausgebildet ist, insbesondere über gegebenenfalls funkfernsteuerbare Hydraulikventile (60).

32. Schnellmontagebaugruppe nach einem der Ansprüche 22 bis 31, dadurch gekennzeichnet, dass die Lenkungssteuerung (48) mit einem Steuereingang zum Anschluß eines Sensors versehen ist, der den Lenkeinschlag eines Zugfahrzeugs und/oder einer Zugdeichsel sensiert.

33. Schnellmontagebaugruppe nach einem der vorhergehenden Ansprüche, dadurch gekennzeichnet, dass die Schnellmontagebaugruppe (17) mit in vertikaler Richtung verstellbaren Abstützelementen (56) versehen ist.

34. Schnellmontagebaugruppe nach Anspruch 33, gekennzeichnet durch einen oder mehrere, mit Hilfsenergie versorgte Aktuatoren zur Verstellung der Abstützelemente (56).

35. Schnellmontagebaugruppe nach Anspruche 34, dadurch gekennzeichnet, dass die Aktuatoren als Hydraulikzylinder (54,77) ausgebildet sind.

36. Schnellmontagebaugruppe nach Anspruch 34 oder 35, dadurch gekennzeichnet, dass die Aktuatoren (54,77) fernbedienbar ausgebildet sind, insbesondere über gegebenenfalls funkfernsteuerbare Hydraulikventile (60).
